# EUROPÄISCHE PATENTANMELDUNG

(11) **EP 2 722 294 A1**
(43) Veröffentlichungstag der Anmeldung: **23.04.2014**
(21) Anmeldenummer: 12189121.2
(22) Anmeldetag: 18.10.2012
(51) Int. Cl.: B65G 17/06, B65G 17/42, B65G 17/44, C03B 35/04

(54) **Ofenkettenelement und -glied für eine Ofenkette sowie selbige und Ofen**

(71) Anmelder: AMBEG Dr. J. Dichter GmbH, 10829 Berlin (DE)
(72) Erfinder: Hoff, Klaus-Uwe, 42499 Hückeswagen (DE)
(74) Vertreter: Grünecker, Kinkeldey, Stockmair & Schwanhäusser

(57) **Zusammenfassung**

Die Erfindung betrifft ein Ofenkettenelement (3) für eine Ofenkette (1) zum Befördern von Werkstücken, wie Glasbehältern, in einen Entspannungsofen, mit wenigstens einer Lasche (30, 31, 32, 33) und wenigstens einem Bolzen (34), wobei die wenigstens eine Lasche (30, 31, 32, 33) wenigstens eine Bohrung (30a, 31 a, 32a, 33a) aufweist, in welcher der wenigstens eine Bolzen (34) zumindest abschnittsweise aufgenommen ist. Des Weiteren betrifft die Erfindung ein Ofenkettenglied (2) für eine Ofenkette (1) zum Befördern von Werkstücken, wie Glasbehältern, in einen Entspannungsofen. Ferner betrifft die Erfindung eine Ofenkette (1) zum Befördern von Werkstücken, wie Glasbehältern, in einen Entspannungsofen. Schließlich betrifft die Erfindung einen Ofen, insbesondere Entspannungsofen für die Glasbearbeitung, mit einer Ofenkette (1) zum Befördern von Werkstücken, wie Glasbehältern. Um ein Aufspreizen von Trägerleisten (4) der Ofenkette (1) zu minimieren, ist erfindungsgemäß vorgesehen, dass der Bolzen (34) mit einem ihn über eine Seitenfläche (37) der Lasche (30, 31, 32, 33) hinaus verlängernden Bolzenstummel (38) versehen ist. Mit einer solchen Ausgestaltung ist es möglich, eine starre Verbindung zwischen den Ofenkettengliedern (2) und der Trägerleiste (4) zu schaffen, so dass die thermische Ausdehnung aufgrund der Erwärmung im Ofen über eine schwimmende Lagerung der Ofenkette ausgeglichen werden kann. Dadurch lassen sich Verspannungen zwischen den Trägerleisten (4) vermeiden.

## Beschreibung

Die Erfindung betrifft ein Ofenkettenelement für eine Ofenkette zum Befördern von Werkstücken, wie Glasbehältern, in einem Entspannungsofen, mit wenigstens einer Lasche und wenigstens einem Bolzen, wobei die wenigstens eine Lasche wenigstens eine Bohrung aufweist, in welcher der wenigstens eine Bolzen zumindest abschnittsweise aufgenommen ist.

Des Weiteren betrifft die Erfindung ein Ofenkettenglied für eine Ofenkette zum Befördern von Werkstücken, wie Glasbehältern, in einen Entspannungsofen.

Ferner betrifft die Erfindung eine Ofenkette zum Befördern von Werkstücken, wie Glasbehältern, in einen Entspannungsofen.

Schließlich betrifft die Erfindung einen Ofen, insbesondere Entspannungsofen für die Glasbearbeitung, mit einer Ofenkette zum Befördern von Werkstücken, wie Glasbehältern.

Ofenkettenelemente, Ofenkettenglieder und Ofenketten der vorbenannten Art sind aus dem Stand der Technik bekannt. Beispielsweise beschreibt die Druckschrift EP 0 960 863 B1 eine Ofenkette für einen Ofen zur kontinuierlichen Wärmebehandlung von Glascontainern. Die Ofenkette umfasst ein Paar von seitlichen Ketten auf einander gegenüberliegenden Seiten, welche in einer Endlosschleife aufgezahnte Endscheiben gewickelt sind. Die Scheiben sind auf gegenüberliegenden Seiten von Wellen angeordnet, und die Verbindungsstücke der Kette weisen eine Mehrzahl von Stützen auf zum Fixieren von flachen Tragarmen, sogenannten brackets, die in freitragender Art von der Kette vorstehen und in Richtung der anderen, parallelen und benachbarten Kette einwärts gerichtet sind. Die Tragarme sind mittels Bolzen fixiert und weisen auf ihnen montierte Querträger auf, welche einen Bereich zwischen zwei Ofenkettenelementen bzw. deren Tragarmen überspannen, um Werkstücke bzw. Glascontainer transportieren zu können. Ferner zeigen die Druckschriften DE 20 52 578 A1, KR 100 301 454 A1 und DE 43 37 811 A1 Ofenketten, die in der Art und Weise von Endlosketten umlaufend mit Tragarmen zur Befestigung von Fördermitteln versehen sind.

Nachteilig bei sämtlichen oben genannten Ofenketten ist, dass die Tragelemente bzw. Querträger sich insbesondere beim Umlaufen von Führungs- und/oder Antriebsrollen relativ zueinander bewegen und aufspreizen können. Durch das Aufspreizen können quer zur Ofenkettenlängsrichtung verlaufende Zwischenräume zwischen den Querträgern entstehen. Durch die Relativbewegung zweier benachbarter Querträger zueinander können darauf abgelegte Werkstücke Schaden nehmen. So können die Werkstücke beispielsweise in die Zwischenräume geraten oder durch die Relativbewegung zerkratzt werden.

Die Erfindung setzt sich daher die Aufgabe zugrunde, die Relativbewegungen benachbarter Querträger bzw. Tragelemente einer Ofenkette zu minimieren.

Diese Aufgabe wird für das eingangs genannte Ofenkettenelement erfindungsgemäß dadurch gelöst, dass der Bolzen mit einem ihn über eine Seitenfläche der Lasche hinaus verlängernden Bolzenstummel versehen ist.

Für das eingangs genannten Ofenkettenglied wird die obige Aufgabe erfindungsgemäß dadurch gelöst, dass das Ofenkettenglied wenigstens zwei erfindungsgemäße Ofenkettenelemente umfasst, die durch wenigstens eine an ihrem jeweiligen Bolzenstummel befestigte Trägerleiste miteinander verbunden sind.

Bei der eingangs genannten Ofenkette wird die obige Aufgabe durch wenigstens ein erfindungsgemäßes Ofenkettenelement und/oder eines erfindungsgemäßes Ofenkettenglied gelöst. Beim eingangs genannten Ofen wird die obige Aufgabe durch eine erfindungsgemäße Ofenkette gelöst.

Die erfindungsgemäßen Lösungen haben den Vorteil, dass eine Längsachse des Bolzenstummels mit einer Mittel- bzw. Drehachse des Bolzens übereinstimmen kann, wodurch die Trägerleiste bzw. der Querträger sehr nahe zur Mittelachse befestigt und so ausgeformt sein kann, dass ein Aufspreizen benachbarter Trägerleisten vermindert oder sogar behoben wird. Mit anderen Worten können die Trägerleisten nahe einem durch die Mittelachse der Bolzen verlaufenden Drehpunkt der Ofenkettenelemente bzw. -glieder angeordnet sein, wodurch ein radialer Abstand der Querträger zu den Drehpunkten und somit ein Aufspreizen der Querträger beim Umlaufen eines Kettenrades minimiert werden kann.

Die erfindungsgemäßen Lösungen können mit den folgenden weiteren, jeweils für sich vorteilhaften Ausführungsformen beliebig kombiniert und weiter verbessert werden:
So lässt sich das Ofenkettenelement einfach mit dem Bolzenstummel versehen, indem die wenigstens eine Lasche eine Innenlasche eines Ofenkettenelements ist, das des Weiteren eine Außenlasche umfasst, die eine weitere Bohrung aufweist, in welcher der wenigstens eine Bolzen zumindest abschnittsweise aufgenommen ist, wobei der Bolzenstummel sich von der Innenlasche auf ihre von der Außenlasche abgewandten Seite weg erstrecken kann. Somit kann der Bolzenstummel auf einfache Art und Weise auf einer Ketteninnenseite angeordnet sein und eine Trägerleiste tragen. In den Bohrungen der Innen- und Außenlasche abgestützt, kann der Bolzen einfach auf den Bolzenstummel wirkende Kräfte aufnehmen, die quer zur Kettenlängsrichtung verlaufen.

Der Bolzenstummel kann als eine Querschnittsflächenerweiterung eines von der wenigstens einen Lasche hervorragenden Verlängerungsabschnittes des Bolzens ausgeformt sein. Indem der Querschnitt des Bolzenstummels größer als der Querschnitt des restlichen Verlängerungsabschnittes bzw. Bolzens ist, kann der Bolzenstummel einfach dazu befähigt werden, eine Trägerleiste bzw. etwaige Hilfsmittel zur Befestigung der Trägerleiste daran zu montieren.

Eine im Wesentlichen parallel zu einer Längsachse des Bolzens gemessene Länge des Verlängerungsabschnittes kann mindestens gleich oder größer sein als eine im Wesentlichen parallel zur Längsachse gemessene Länge eines sich von einer weiteren Seitenfläche der wenigstens einen Lasche weg erstreckenden Verbindungsabschnittes des Bolzens. Der Verbindungsabschnitt kann sich zwischen der wenigstens einen Innenlasche und der wenigstens einen Außenlasche erstrecken und seine Länge kann einer inneren Breite des Ofenkettenelements entsprechen, wobei die innere Breite äquivalent zur inneren Breite einer Rollenkette bestimmt werden kann. Somit kann der Verlängerungsabschnitt und folglich auch der Bolzenstummel eine Länge aufweisen, die es ermöglicht, die Trägerleiste oder etwaige Hilfsmittel einfach am Bolzenstummel zu befestigen, ohne dass die Trägerleiste oder die Hilfsmittel Gefahr laufen, in einen Eingriffsbereich der Ofenkette für etwaige Kettenräder bzw. in gefährliche Nähe zu den Kettenrädern zu gelangen.

Am Bolzenstummel kann wenigstens eine Durchgangsbohrung ausgeformt sein, die sich im Wesentlichen quer zu einer Längsachse des Bolzenstummels erstrecken kann. Mit Hilfe der Durchgangsbohrung, die quer zur Längsrichtung der Ofenkette verlaufen kann, können die Trägerleiste oder etwaige Hilfsmittel einfach am Bolzenstummel montiert sein.

Ein Befestigungselement kann in der Durchgangsbohrung gehalten sein. Beim Befestigungselement kann es sich beispielsweise um eine Schraube, Niete oder ähnliches zum kraft- und/oder formschlüssigen Zusammenwirken mit dem Bolzenstummel bzw. der Durchgangsbohrung handeln, was ein Montieren der Trägerleiste oder von Hilfsmitteln zu deren Befestigung weiter vereinfacht.

Das Befestigungselement kann eine Blechmutter zur Befestigung der Trägerleiste der Ofenkette tragen. Das Befestigungselement kann sich in Eingriff mit der Blechmutter befinden, um dieses form- und/oder kraftschlüssig zu halten und/oder mit dem Bolzenstummel zu verbinden. Die Blechmutter kann als Hilfsmittel zur Befestigung der Trägerleiste dienen und somit ein Befestigen der Trägeleiste am Bolzenstummel vereinfachen.

Die Blechmutter kann einen Schenkel zum drehsicheren Halten der Blechmutter am Bolzenstummel ausbilden. Zwischen dem Schenkel und dem Bolzen bzw. Bolzenstummel kann eine Aufnahme gebildet sein, die sich entlang des Bolzenstummels erstrecken und ein Anbringen der Trägerleiste am Bolzen vereinfachen kann, indem die Trägerleiste zumindest abschnittsweise in der Aufnahme angeordnet sein kann. Durch den Schenkel kann die Blechmutter am Bolzenstummel und/oder an der Trägerleiste gekontert sein bzw. sich am Bolzenstummel und/oder der Trägerleiste so abstützen, dass die Blechmutter sich beim Eindrehen des Befestigungselementes nicht mit diesem mitdrehen kann.

Die Befestigungsmutter kann eine sich vom Bolzenstummel weg erstreckende Durchführung für das Befestigungselement ausbilden. Die Durchführung kann als eine Art zylindrische Hülse ausgestaltet sein, die ein in Eingriffbringen des Befestigungselementes bzw. einer Befestigungsschraube mit der Blechmutter vereinfachen kann. Die zylindrische Hülse kann mit einem Innengewinde versehen sein.

Ein Sicherungsblech kann sich quer zum Bolzenstummel erstrecken. Das Sicherungsblech kann beispielsweise durch das Befestigungselement gehalten bzw. mit einer Öse versehen sein, durch die das Befestigungselement hindurchgeführt sein und die zwischen Befestigungselement und Bolzen sitzen kann. Das Sicherungsblech kann helfen, Bewegungen der Trägerleiste in einer Längsrichtung der Ofenkette zu minimieren bzw. die Trägerleiste am Schenkel der Blechmutter und/oder in der Aufnahme zwischen Schenkel und Bolzen zu sichern.

Die Trägerleiste kann unterhalb des Bolzens angeordnet sein, so dass eine Aufnahmefläche der Trägerleiste unterhalb des Bolzens liegt und eine Aufnahmeebene für ein Werkstück bilden kann, in welcher die Drehachse des Bolzens angeordnet sein kann, um eine Aufspreizung benachbarter Trägerleisten beispielsweise beim Umlaufen eines Kettenrades zu minimieren.

Gemäß einer vorteilhaften Weiterbildung eines erfindungsgemäßen Ofens kann vorgesehen sein, dass die Ofenkette zwischen wenigstens zwei in einer Längsrichtung der Ofenkette voneinander beabstandeten Kettenrädern und/oder Führungselementen für die Ofenkette zumindest quer zur Längsrichtung schwimmend gelagert ist. Somit kann bei einer verhältnismäßig starren Verbindung zwischen Trägerleiste und Ofenkettenelement eine durch Temperaturunterschiede innerhalb und/oder außerhalb des Ofens bedingte freie Ausdehnung bzw. Kontraktion der Ofenkette ermöglicht sein. Durch eine möglichst starre Ofenkettenkonstruktion lassen sich Relativbewegungen zwischen den Trägerleisten weiter minimieren.

Im Folgenden ist die Erfindung beispielhaft anhand einer möglichen Ausführungsform mit Bezug auf die beigefügte Zeichnung genauer beschrieben. Die bei dieser Ausführungsform dargestellten Merkmalskombinationen dienen lediglich Anschauungszwecken. Einzelne Merkmale können nach Maßgabe ihrer oben beschriebenen Vorteile auch weggelassen werden, wenn es bei bestimmten Anwendungen auf den Vorteil des jeweiligen Merkmals nicht ankommt.

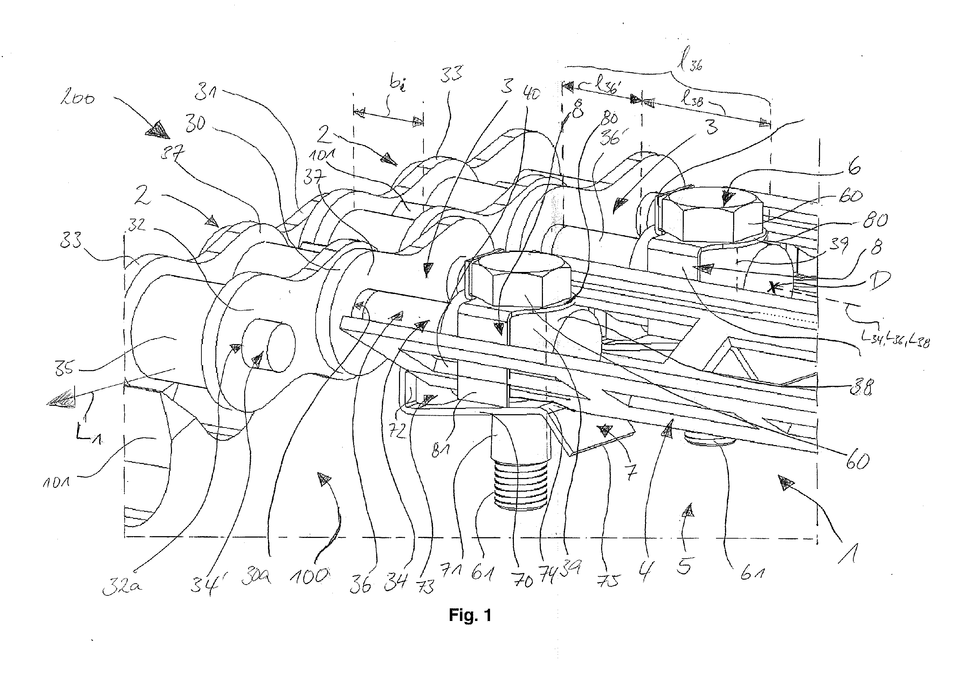

- Fig. 1: zeigt eine schematische Perspektivansicht eines Abschnittes einer erfindungsgemäßen Ofenkette, wobei ein Zusammenwirken eines erfindungsgemäßen Ofenkettenelementes mit einer Trägerleiste dargestellt ist.

Fig. 1 zeigt einen Abschnitt eines erfindungsgemäßen Ofenkettentriebs 200, der ein Kettenrad 100 und eine auf das Kettenrad 100 aufgelegte Ofenkette 1 umfasst, in einer schematischen Perspektivansicht. Die Ofenkette 1 besitzt eine Vielzahl von Ofenkettengliedern 2, die jeweils aus wenigstens zwei Ofenkettenelementen 3 gebildet sind, die zwischen sich eine Trägerleiste 4 tragen, die einen Innenraum 5 der Ofenkette 1 bzw. eines Ofens überspannt. Die Ofenkettenglieder 2 sind einer Kettenlängsrichtung L₁ gemäß der Darstellung in Fig. 1 im Wesentlichen linear ausgerichtet.

Die Ofenkettenelemente umfassen eine Innenlasche 30 und eine Außenlasche 31 sowie eine weitere Innenlasche 32 und eine weitere Außenlasche 33. Die Laschen 30 bis 33 sind jeweils über Bolzen 34 und 34' miteinander verbunden, die in Bohrungen 30a, 30b, 30c und 30d der Laschen 30, 31, 32 bzw. 33 aufgenommen sind. Auf den Bolzen 34 und 34' sind jeweils Rollen 35 angeordnet, die in der Regel an den weiteren Außenlaschen 33 ausgeformten Hülsen (nicht gezeigt) aufliegen, welche die Bolzen umgreifen, wie es bei aus dem Stand der Technik bekannten Rollenketten der Fall ist.

Mit anderen Worten bilden die Innenlasche 30, die Außenlasche 31, die weitere Innenlasche 32, die weitere Außenlasche 33, die Bolzen 34 sowie 34' und die Rollen 35 als Teiles eines Ofenkettenelementes 3 eine Art Kettenelement einer Rollenkette. Eine innere Breite bᵢ der Rollenkette entspricht einer quer zur Kettenlängsrichtung L₁ gemessenen Länge der Rolle 35 bzw. einem quer zur Kettenlängsrichtung L₁ gemessenen Abstand zwischen der weiteren Innenlasche 32 und der weiteren Au βenlasche 33.

Die Bolzen 34 sind erfindungsgemäß ausgestaltet, wohingegen die Bolzen 34' dem Stand der Technik entsprechen. Die erfindungsgemäßen Bolzen 34 besitzen einen Verlängerungsabschnitt 36, der sich von der Seitenfläche 37 der Innenlasche 30 weg in Richtung des Innenraumes 5 der Ofenkette 1 erstreckt. Der Verlängerungsabschnitt 36 kann entweder an einem Standardbolzen 34' angebracht sein oder ein erfindungsgemäßer Bolzen 34 kann einstückig mit dem Verlängerungsabschnitt 36 ausgeformt sein.

Der Verlängerungsabschnitt 36 ist mit einem Bolzenstummel 38 versehen. Der Bolzenstummel 38 erstreckt sich somit ebenfalls von der Seitenfläche 37 weg. Der Bolzen 34, Verlängerungsabschnitt 36 und Bolzenstummel 38 weisen jeweils Längsachsen L₃₄, L₃₆ bzw. L₃₈ auf, die übereinander liegen und durch einen Drehpunkt D des Bolzens 34 verlaufen, um den die Ofenkette 1 krümmbar ist bzw. um den die Rollen 34 rotieren während die Ofenkette 1 einer Krümmung des Kettenrade 100 folgt und Zähne 101 des Kettenrades 100 in Zwischenräume zwischen den Rollen 35 eingreifen.

Der Verlängerungsabschnitt 36 und der Bolzenstummel 38 sind folglich konzentrisch zueinander angeordnet, wobei sie zylindrisch ausgeformt sind und ein Durchmesser des Bolzenstummels 38 größer ist als ein Durchmesser des Verlängerungsabschnitts 36 innerhalb der Bohrungen 30a bis d. Der Verlängerungsabschnitt 36 kann eine Länge I₃₆ aufweisen, die parallel zur Längsachse L₃₆ gemessen ist und eine parallel zur Längsachse L₃₈ gemessenen Länge I₃₈ des Bolzenstummels 30, sowie eine Länge I₃₆ des restlichen Verlängerungsabschnittes 36' umfassen kann, der den gleichen Durchmesser wie der Bolzen 34 in den Bohrungen 30a bis 33a aufweisen kann. Somit bietet der Bolzenstummel 38 genügend Material, um eine hier nur schematisch dargestellte Durchführung darin auszuformen, die beispielsweise als Durchgangsbohrung 39 hergestellt sein kann.

Ein Befestigungselement 6 kann in der Durchführung 39 angeordnet sein bzw. in diese eingreifen. Beim Befestigungselement 6 kann es sich beispielsweise um einen Schraubenbolzen mit einem Kopf 60 und einem Schaft 61 handeln. Der Schaft 61 kann mit einem Gewinde versehen sein.

Eine Blechmutter 7 kann mit Hilfe des Befestigungselements 6 am Bolzenstummel 38 befestigt sein. Die Blechmutter 7 kann einen Schenkel 70 und eine Durchführung 71 aufweisen. Die Durchführung 71 kann wie im folgenden Fall als Hülse für den Schaft 61 des Befestigungselementes 6 ausgestaltet sein. Der Schenkel 70 kann einen Querabschnitt 72 aufweisen, der sich in Richtung zum Bolzen 34 erstrecken kann, zu dem der übrige Schenkel 70 im Wesentlichen beabstandet ist und somit eine Aufnahme 73 zwischen Schenkel 70, Querabschnitt 72 und Verlängerungsabschnitt 36 samt Bolzenstummel 38 aufspannt, in der die Trägerleiste 4 aufgenommen sein kann. Der Schenkel 70 kann des Weiteren mit einem Knick 74 versehen sein, an dem ein freies Schenkelende 75 in Richtung weg von der Aufnahme 73 abknickt, während sich die Aufnahme 73 am Knick 74 verjüngt. Somit erlaubt das abgeknickte freie Schenkelende 75 ein einfaches Einschieben der Trägerleiste 4 in die Aufnahme 73.

Des Weiteren ist ein Sicherungsblech 8 vorgesehen, dass sich im Wesentlichen parallel zum Befestigungselemente außen entlang des Bolzenstummels 38 erstreckt und durch eine an der Trägerleiste 4 ausgeformte Aussparung 40 ragt. Das Sicherungsblech 8 weist eine Öse 80 und eine daran befestigte Sicherungslasche 81 auf. Die Öse 80 ist zwischen dem Kopf 60 des Befestigungselements und dem Bolzenstummel 38 festgeklemmt, während sich die Sicherungslasche 81 im Wesentlichen parallel zur Längserstreckung des Schaftes 61 des Befestigungselementes 6 bzw. quer zur Längsachse L₃₈ des Bolzenstummels 38 erstreckt und durch die Aussparung 40 in der Trägerleiste 4 ragt.

Im Rahmen des Erfindungsgedankens sind Abweichungen von der oben beschriebenen Ausführungsform möglich. So kann die Ofenkette 1 beliebig viele Ofenkettenglieder 2, Ofenkettenelemente 3, Trägerleisten 4, Befestigungselemente 6, Blechschrauben 7 und Sicherungsbleche 8 aufweisen, die einen Innenraum 5 bilden bzw. überspannen können.

Die Innenlasche 30, die Außenlasche 31, die weitere Innenlasche 32 und die weitere Außenlasche 33 können den jeweiligen Anforderungen gemäß mit Bohrungen 30a, 31 a, 32a, 33a versehen sein, um Bolzen 34, 34' aufzunehmen, deren Verbindungsabschnitte (nicht gezeigt) die Laschen 30, 31, 32, 33 miteinander verbinden und daran ausgeformte Hülsen sowie Rollen tragen können.

Die Verlängerungsabschnitte 36 können den jeweiligen Anforderungen gemäß einstückig mit den Bolzen 34 ausgeformt oder daran beispielsweise stoffschlüssig durch Schweißen angebracht sein. Die Seitenflächen 37 der Laschen 30, 31, 32, 33 können den jeweiligen Anforderungen gemäß ausgeformt sein. Die Tragfortsätze 38 können den jeweiligen Anforderungen gemäß mit Durchgangsbohrungen 39 versehen sein, um Befestigungselemente 6 darin aufnehmen zu können, wobei die Befestigungselemente 6 beispielsweise Schrauben, Nieten, Splinte sein können, die zum kraft- und/oder formschlüssigen Zusammenwirken mit den Bolzenstummeln ausgestaltet sein können.

Die Trägerleisten 4 können beliebig mit Aussparungen 40 versehen sein, in welche Sicherungsbleche 8 tragen können. Die Befestigungselemente 6 können beliebig mit Köpfen 60 und Schäften 61 versehen sein, um mit den Bolzenstummeln 38 zusammenzuwirken und Blechmuttern 7 sowie Sicherungsbleche 8 an den Bolzen 34 bzw. deren Bolzenstummel 38 befestigen zu können.

Die Blechmuttern 7 können den jeweiligen Anforderungen gemäß mit Schenkeln 70, Durchführungen 71, Querabschnitten 72, Aufnahmen 73, Knicken 74 und freien Schenkelenden 75 ausgestaltet sein, um ein möglichst einfaches Anbringen der Trägerleisten 4 an den Bolzen 34 zu ermöglichen, eine vom Schenkel 70 in Richtung des Bolzenstummels 38 wirkende Klemmkraft zum Halten bzw. Fixieren der Trägerleiste 4 aufzubringen sowie die Blechmutter 7 drehsicher am Bolzenstummel 38 zu halten. Die Blechmutter 7 kann alternativ als einfache Sechskantmutter oder ein beliebig geformtes Element ausgestaltet sein, das das Befestigungselement aufnehmen kann. Entsprechend können die Sicherungsbleche 8 den jeweiligen Anforderungen gemäß mit Ösen 80 und Sicherungslaschen 81 ausgeformt sein, um vorteilhaft mit dem Bolzenstummel 38, Befestigungselement 6, der Blechmutter 7 und/oder der Trägerleiste 4 zusammen zu wirken.

### Bezugszeichen

- 1: Ofenkette
- 2: Offenkettenglied
- 3: Ofenkettenelement
- 4: Trägerleiste
- 5: Innenraum der Ofenkette
- 6: Befestigungselement
- 7: Blechmutter
- 8: Sicherungsblech

- 30: Innenlasche
- 30a: Bohrung
- 31: Außenlasche
- 31 a: Bohrung
- 32: weitere Innenlasche
- 32a: Bohrung
- 33: weitere Außenlasche
- 33a: Bohrung
- 34: Bolzen (erfindungsgemäß)
- 34': Bolzen (Standard)
- 35: Rolle
- 36: Verlängerungsabschnitt
- 37: Seitenfläche
- 38: Bolzenstummel
- 39: Durchgangsbohrung
- 40: Aussparung

- 60: Kopf des Befestigungselements
- 61: Schaft des Befestigungselements

- 70: Schenkel der Blechmutter
- 71: Durchführung
- 72: Querabschnitt/Joch des Schenkels
- 73: Aufnahme
- 74: Knick
- 75: freies Schenkelende

- 80: Öse
- 81: Sicherungslasche

- 100: Kettenrad
- 200: Ofenkettentrieb

- L₁: Kettenlängsrichtung
- bᵢ: innere Breite
- I₃₆: Länge des Verlängerungsabschnitts
- I₃₈: Länge des Bolzenstummels
- I_{36'}: Länge des restlichen Verlängerungsabschnitts
- L₃₄: Längsachse Bolzen
- L₃₆: Längsachse Verlängerungsabschnitt
- L₃₈: Längsachse Bolzenstummel
- D: Drehpunkt der Bolzen

## Patentansprüche

1. Ofenkettenelement (3) für eine Ofenkette (1) zum Befördern von Werkstücken, wie Glasbehältern, in einen Entspannungsofen, mit wenigstens einer Lasche (30, 31, 32, 33) und wenigstens einem Bolzen (34), wobei die wenigstens eine Lasche (30, 31, 32, 33) wenigstens eine Bohrung (30a, 31 a, 32a, 33a) aufweist, in welcher der wenigstens eine Bolzen (34) zumindest abschnittsweise aufgenommen ist, **dadurch gekennzeichnet, dass** der Bolzen (34) mit einem ihn über eine Seitenfläche (37) der Lasche (30, 31, 32, 33) hinaus verlängernden Bolzenstummel (38) versehen ist.

2. Ofenkettenelement (3) nach Anspruch 1, **dadurch gekennzeichnet, dass** die wenigstens eine Lasche (30, 31, 32, 33) eine Innenlasche (30, 32) des Offenkettenelements (3) ist, das des weiteren eine Außenlasche (31, 33) umfasst, die eine weitere Bohrung (31 a, 33a) aufweist, in welcher der wenigstens eine Bolzen (34) zumindest abschnittsweise aufgenommen ist, wobei der Bolzenstummel (38) sich von der Innenlasche (30, 32) auf ihrer von der Außenlasche (31, 33) abgewandten Seitenfläche (37) weg erstreckt.

3. Ofenkettenelement (3) nach Anspruch 1 oder 2, **dadurch gekennzeichnet, dass** der Bolzenstummel (38) als eine Querschnittsflächenerweiterung eines von der wenigstens einen Lasche (30, 31, 32, 33) hervorragenden Verlängerungsabschnittes (36) des Bolzens (34) ausgeformt ist.

4. Ofenkettenelement (3) nach Anspruch 3, **dadurch gekennzeichnet, dass** eine im Wesentlichen parallel zu einer Längsachse (L₃₄) des Bolzens (34) gemessene Länge (L₃₄) des Verlängerungsabschnittes (36) mindestens gleich oder größer ist als eine im Wesentlichen parallel zur Längsachse (L₃₄) gemessene Länge eines sich von einer weiteren Seitenfläche der wenigstens einen Lasche (30, 31, 32, 33) wegerstreckenden Verbindungsabschnittes des Bolzens (34).

5. Ofenkettenelement (3) nach einem der Ansprüche 1 bis 4, **dadurch gekennzeichnet, dass** am Bolzenstummel (38) wenigstens eine Durchgangsbohrung (39) ausgeformt ist, die sich im Wesentlichen quer zu einer Längsachse (L₃₈) des Bolzenstummels (38) erstreckt.

6. Ofenkettenelement (3) nach Anspruch 5, **dadurch gekennzeichnet, dass** ein Befestigungselement (6) in der Durchgangsbohrung (39) gehalten ist.

7. Ofenkettenelement (3) nach Anspruch 6, **dadurch gekennzeichnet, dass** das Befestigungselement (6) eine Blechmutter (7) zur Befestigung einer Trägerleiste (4) der Ofenkette (1) trägt.

8. Ofenkettenelement (3) nach Anspruch 7, **dadurch gekennzeichnet, dass** die Blechmutter (7) einen Schenkel (70) zur drehsicheren Halterung der Blechmutter (7) ausbildet.

9. Ofenkettenelement (3) nach Anspruch 7 oder 8, **dadurch gekennzeichnet, dass** die Blechmutter (7) eine sich im vom Bolzenstummel (38) weg erstreckende Durchführung (71) für das Befestigungselement (6) ausbildet.

10. Ofenkettenelement (3) nach einem der Ansprüche 1 bis 9 **gekennzeichnet durch** ein Sicherungsblech (8), das sich zumindest abschnittsweise quer zum Bolzenstummel (38) erstreckt.

11. Ofenkettenglied (2) für eine Ofenkette (1) zum Befördern von Werkstücken, wie Glasbehältern, in einen Entspannungsofen, **gekennzeichnet durch** wenigstens zwei Ofenkettenelemente (3) nach wenigstens einem der Ansprüche 1 bis 10, die **durch** wenigstens eine an ihrem jeweiligen Bolzenstummel (38) befestigte Trägerleiste (4) miteinander verbunden sind.

12. Ofenkette (1) zum Befördern von Werkstücken, wie Glasbehältern, in einen Entspannungsofen, **gekennzeichnet durch** wenigstens ein Ofenkettenelement (3) nach einem der Ansprüche 1 bis 10 und/oder ein Ofenkettenglied (2) nach Anspruch 11.

13. Ofen, insbesondere Entspannungsofen für die Glasbearbeitung, mit einer Ofenkette (1) zum Befördern von Werkstücken, wie Glasbehältern, **dadurch gekennzeichnet, dass** die Ofenkette (1) gemäß Anspruch 12 ausgebildet ist.

14. Ofen nach Anspruch 13, **dadurch gekennzeichnet, dass** die Ofenkette (1) zwischen wenigstens zwei in einer Längsrichtung (L₁) der Ofenkette (1) voneinander beabstandeten Kettenrädern (100) und/oder Führungselementen für die Ofenkette (1) zumindest quer zur Längsrichtung (L₁) schwimmend gelagert ist.

## Geänderte Patentansprüche

### Geänderte Patentansprüche gemäss Regel 137(2) EPÜ.

**1.** Ofenkettenglied (2) für eine Ofenkette (1) zum Befördern von Werkstücken, wie Glasbehältern, in einen Entspannungsofen, mit wenigstens zwei Ofenkettenelementen (3) mit wenigstens einer Lasche (30, 31, 32, 33) und wenigstens einem Bolzen (34), wobei die wenigstens eine Lasche (30, 31, 32, 33) wenigstens eine Bohrung (30a, 31a, 32a, 33a) aufweist, in welcher der wenigstens eine Bolzen (34) zumindest abschnittsweise aufgenommen ist, und wobei der Bolzen (34) mit einem ihn über eine Seitenfläche (37) der Lasche (30, 31, 32, 33) hinaus verlängernden Bolzenstummel (38) versehen ist, **dadurch gekennzeichnet, dass** die wenigstens zwei Ofenkettenelemente (3) durch wenigstens eine an ihrem jeweiligen Bolzenstummel (38) befestigte Trägerleiste (4) miteinander verbunden sind.

**2.** Ofenkettenglied (2) nach Anspruch 1, **dadurch gekennzeichnet, dass** die wenigstens eine Lasche (30, 31, 32, 33) eine Innenlasche (30, 32) des Offenkettenelements (3) ist, das des weiteren eine Außenlasche (31, 33) umfasst, die eine weitere Bohrung (31a, 33a) aufweist, in welcher der wenigstens eine Bolzen (34) zumindest abschnittsweise aufgenommen ist, wobei der Bolzenstummel (38) sich von der Innenlasche (30, 32) auf ihrer von der Außenlasche (31, 33) abgewandten Seitenfläche (37) weg erstreckt.

**3.** Ofenkettenglied (2) nach Anspruch 1 oder 2, **dadurch gekennzeichnet, dass** der Bolzenstummel (38) als eine Querschnittsflächenerweiterung eines von der wenigstens einen Lasche (30, 31, 32, 33) hervorragenden Verlängerungsabschnittes (36) des Bolzens (34) ausgeformt ist.

**4.** Ofenkettenglied (2) nach Anspruch 3, **dadurch gekennzeichnet, dass** eine im Wesentlichen parallel zu einer Längsachse (L₃₄) des Bolzens (34) gemessene Länge (L₃₄) des Verlängerungsabschnittes (36) mindestens gleich oder größer ist als eine im Wesentlichen parallel zur Längsachse (L₃₄) gemessene Länge eines sich von einer weiteren Seitenfläche der wenigstens einen Lasche (30, 31, 32, 33) wegerstreckenden Verbindungsabschnittes des Bolzens (34).

**5.** Ofenkettenglied (2) nach einem der Ansprüche 1 bis 4, **dadurch gekennzeichnet, dass** am Bolzenstummel (38) wenigstens eine Durchgangsbohrung (39) ausgeformt ist, die sich im Wesentlichen quer zu einer Längsachse (L₃₈) des Bolzenstummels (38) erstreckt.

**6.** Ofenkettenglied (2) nach Anspruch 5, **dadurch gekennzeichnet, dass** ein Befestigungselement (6) in der Durchgangsbohrung (39) gehalten ist.

**7.** Ofenkettenglied (2) nach Anspruch 6, **dadurch gekennzeichnet, dass** das Befestigungselement (6) eine Blechmutter (7) zur Befestigung einer Trägerleiste (4) der Ofenkette (1) trägt.

**8.** Ofenkettenglied (2) nach Anspruch 7, **dadurch gekennzeichnet, dass** die Blechmutter (7) einen Schenkel (70) zur drehsicheren Halterung der Blechmutter (7) ausbildet.

**9.** Ofenkettenglied (2) nach Anspruch 7 oder 8, **dadurch gekennzeichnet, dass** die Blechmutter (7) eine sich vom Bolzenstummel (38) weg erstreckende Durchführung (71) für das Befestigungselement (6) ausbildet.

**10.** Ofenkettenglied (2) nach einem der Ansprüche 1 bis 9 **gekennzeichnet durch** ein Sicherungsblech (8), das sich zumindest abschnittsweise quer zum Bolzenstummel (38) erstreckt.

**11.** Ofenkette (1) zum Befördern von Werkstücken, wie Glasbehältern, in einen Entspannungsofen, **gekennzeichnet durch** wenigstens ein Ofenkettenglied (2) nach einem der Ansprüche 1 bis 10.

**12.** Ofen, insbesondere Entspannungsofen für die Glasbearbeitung, mit einer Ofenkette (1) zum Befördern von Werkstücken, wie Glasbehältern, **dadurch gekennzeichnet, dass** die Ofenkette (1) gemäß Anspruch 11 ausgebildet ist.

**13.** Ofen nach Anspruch 12, **dadurch gekennzeichnet, dass** die Ofenkette (1) zwischen wenigstens zwei in einer Längsrichtung (L₁) der Ofenkette (1) voneinander beabstandeten Kettenrädern (100) und/oder Führungselementen für die Ofenkette (1) zumindest quer zur Längsrichtung (L₁) schwimmend gelagert ist.
